# EUROPEAN PATENT SPECIFICATION

(11) **EP 2 233 380 B1**
(45) Date of publication and mention of the grant of the patent: **04.07.2018**
(21) Application number: 09155956.7
(22) Date of filing: 24.03.2009
(51) Int. Cl.: B62B 3/06, B66F 5/00

(54) **A transport system**
Transportsystem
Système de transport

(43) Date of publication of application: 29.09.2010
(73) Proprietor: Bull Bug ApS, 6760 Ribe (DK)
(72) Inventor: Thøgersen, Lars, DK-2300, Copenhagen S (DK)
(74) Representative: Inspicos P/S

(56) References cited:
- EP-A- 1 816 051
- WO-A-03/014001
- GB-A- 156 962
- US-A1- 2006 024 150
- US-A1- 2008 101 903
- US-A1- 2009 065 272

## Description

### FIELD OF THE INVENTION

The present invention relates to a transport system comprising a wheeled transport device, such as a crate or transport cage, which is preferably non-motorized, and a motorized unit, e.g. a motorized roller dolly, for achieving motorized driving of the wheeled transport device.

### BACKGROUND OF THE INVENTION

In a variety of instances, non-motorized wheeled transport devices are manually pushed or drawn along floors. For picking operations in storehouses, e.g. storehouses for dairy products, such wheeled transport devices comprise a storage space, which is typically open at one side face as well as upwardly open, whereas the remaining three side faces may be delimited by wall or meshes of e.g. rods to form a so-called transport cage. During picking, an operator pulls a transport cage along ground in the storehouse and fills the cage as he or she proceeds through the storehouse.

With a view to reducing the amount of labour work and in order to improve working conditions, various attempts have been made in order to fully or partially automate picking operations. However, fully automated systems are expensive and usually require a total rebuilding of a storehouse or even the erection of new storehouses. It has also been proposed to provide motorised propelling units on transport cages in order to alleviate operators from the task of manually pushing or drawing the cages along ground. The cages may weigh up to several hundred kilograms as they fill up, and manual handling thereof is ergonomically harmful to the operators. However, in the management of storehouses, motorised transport cages are often not affordable, in particular as the cages are often roughly handled during further transport, e.g. on trucks, and during unloading in grocery stores. Consequently, the lifetime of transport cages may be relatively short, and expensive, fragile components, such as motorized drive units, should be avoided. Further, battery packs of motorized transport cages would have to be regularly recharged, so that, at all times, a significant proportion of transport cages in storehouses would be out of operation for charging purposes. This would be disadvantageous with regard to economical efficiency as well as with regard to the amount of space occupied by charging docks for non-operating cages. In addition if motorized aids were to be coupled to the cage for towing or pushing thereof, the efficiency of the human operator in charge of the picking operation would be decreased, as such motorized aids would take up operating space and partially obstruct the operator's access to the transport cage, in particular if placed at the open-faced side of the transport cage.

However, despite the above problems, labours, employers and public authorities increasingly demand motorised assistance for the transport of wheeled devices in storehouses in order to improve working conditions. Various motorized devices providing motor-aided transport of wheeled devices are known from, e.g., WO 03/014001, US 2008/101903, US 2009/065272, and US 2006/024150, upon which the pre-amble of claim 1 is based.

### DETAILED DESCRIPTION OF THE INVENTION

EP 0933281 A1 shows a transport system on which the preamble of claim 1 is based. On this background, it is an object of embodiments of the invention to provide a transport system allowing for motorised transport of wheeled devices in storehouses, which overcomes the above problems. More specifically, it is an object of embodiments of the invention to provide a system, which is easy to implement or retrofit as an add-on to existing transport systems, and which does not obstruct the operators' working space to an unacceptable degree. It is a further object of embodiments of the invention to provide a system, which can be implemented at low cost.

The invention hence provides a transport system according to claim 1 and a method according to claim 8. The wheeled transport device of the system may e.g. comprise a wheeled transport cage or crate.

The motorized unit constitutes a separate unit, e.g. in the form of a motorized roller dolly. The motorized unit can therefore be implemented as a retrofit component to existing systems, so as to thereby upgrade the non-motorized wheeled transport device with motorized motion means at low cost. Such upgrade does not require any rebuild of crates, transport cages or other wheeled transport devices, or only minor.adaptation thereof, and no changes to the design or layout of storehouses is required. Further, the motorized unit may be separated from the wheeled transport device, before the latter is moved away from the storehouse, e.g. loaded onto a truck for further transport thereof, for instance to grocery stores. Hence, the risk of rough handling and possible damage of the motorized unit and its electric and mechanical driving components is considerably lower than if the motor drive components were non-separably integrated in the wheeled transport device.

As used herein, the terms "front" and "rear" are defined with respect to the intended direction of movement of the wheeled transport device and the motorized unit. It should however be understood, that the direction of movement is not essential for the solution to the problems underlying the invention, and that the direction of movement may be reversed or the elements mirrored.

As the motorized unit is configured to lift the wheeled transport device off the ground, it will be appreciated that the motorized unit engages a bottom surface of the wheeled transport device from below, i.e. by pushing a bottom surface of the transport device upwardly. This is conveniently achieved in that the motorized unit is configured to pass below the transport device, so that the height of the lifting portion of the motorized unit fits in between the bottom surface of the wheeled transport device and ground. By this arrangement, bulky towing, lifting and driving elements in front or at the sides of the wheeled transport device are avoided, and accordingly any obstruction of the operating space in the vicinity of the wheeled transport device is minimized.

The motorized unit may be powered by a rechargeable battery pack, which may be integrated in the motorized unit, or which may be exchangeable. Both of the two setups allow battery recharge, while the wheeled transport device is in operation, e.g. while it is being manually conveyed, while it is out of operation, or while it is at a remote location for unloading. In case of an exchangeable battery pack, the transport system may conveniently comprise at least one excess rechargeable battery pack for the motorized unit, so that one battery pack may always be charged and ready for operation, while the other is being charged.

In one embodiment, the upper surface of the motorized unit is inclined with respect to the bottom surface of the wheeled transport device, so that a front end of the motorized unit may pass freely under the bottom surface. The inclination may be configured such that a rear portion of the upper surface may either enter into abutting engagement with the bottom surface of the wheeled transport device, as described in further detail below, or may pass freely there under. In both instances, the motorized unit may be wedged in between ground and the bottom surface of the wheeled transport device. The inclination angle may be between 2° and 30° with respect to horizontal, such as between 2° and 10°, or between 5° and 20°.

With a view to facilitating steering of the wheeled transport device during manual, non-motorized transport of the wheeled transport device and possibly also during motorized transport thereof by means of the motorized unit, at least two of its wheels may be so-called swivel wheels, i.e. wheels, which are rotatable around a vertical axis.

In order to lift the wheeled transport device, or at least a portion thereof, off the ground, the upper surface of the motorized unit may be upwardly spring-biased, with an upward biasing force configured to be larger than the downward gravitational force provided by the maximum load of the wheeled transport device.

The motorized unit comprises a structure for moving its upper surface between a non-engagement configuration, in which it may pass freely under the bottom surface of the wheeled transport device, and an engagement configuration, in which at least a portion thereof engages the bottom surface of the wheeled device. In such embodiments, the motorized unit may lift all four wheels of the wheeled transport device off the ground, so that the entire load of the wheeled transport device rests on the motorized unit.

The locking engagement between the motorized unit and the wheeled transport device as well as unlocking may conveniently be achieved by means of a hand- or foot-activatable mechanism. The same mechanism, or an additional mechanism, may be utilized to lift the wheeled transport device (or a portion thereof) off the ground, unless the lifting operation is carried out by spring-load. Lifting may be power-assisted, e.g. by an electrical drive and/or by pneumatic or hydraulic cylinders.

The motorized unit may be configured to drive two wheels at its rear end, and a control system may be incorporated in the motorized unit, allowing a user to operate said two wheels at different speeds in order to thereby steer the transport system during motorized movement thereof. A control interface, e.g. panel, joystick or the like for operator control may be provided on an upright member extending from the motorized unit to an appropriate height above ground.

The motorized unit preferably comprises a structure for releasably locking it to the wheeled transport device, so that no modification to the wheeled transport device is necessary when the motorized unit is provided as a retrofit upgrade. However, it should be understood that systems, in which the locking mechanism or part thereof is provided on the wheeled transport device are within the scope of the present invention.

As described above, the motorized unit may include an exchangeable rechargeable battery pack for powering the motor drive.

One field of use of the present invention, which is of particular interest, is the use during picking operations in storehouses for dairy products. The invention hence also provides a method including, the use of a motorized unit as described and claimed herein for obtaining motorized transport of wheeled, non-motorized transport cages in a storehouse for dairy products. It should however, be understood, that the present invention is in general not limited to particular products, and that the transport system, motorized unit and method of the invention may be used for any types of products, including any types of products picked in warehouses.

### BRIEF DESCRIPTION OF THE DRAWINGS

Fig. 1 is a perspective illustration of an embodiment of a transport system according to the invention;
Fig. 2 is a side view of the embodiment of Fig. 1;
Figs. 3 and 4 illustrate a first embodiment of a system of the motorized unit of the present invention for engaging a transport cage or crate.

### DETAILED DESCRIPTION OF THE DRAWINGS

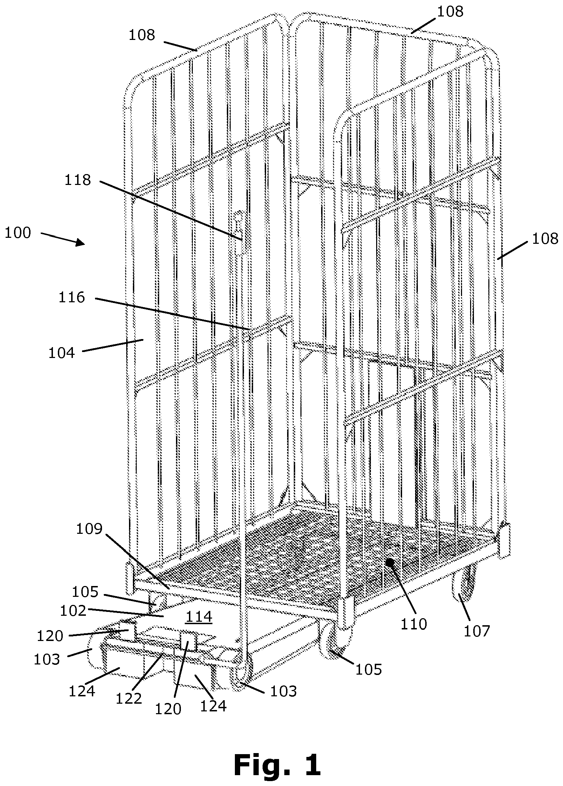

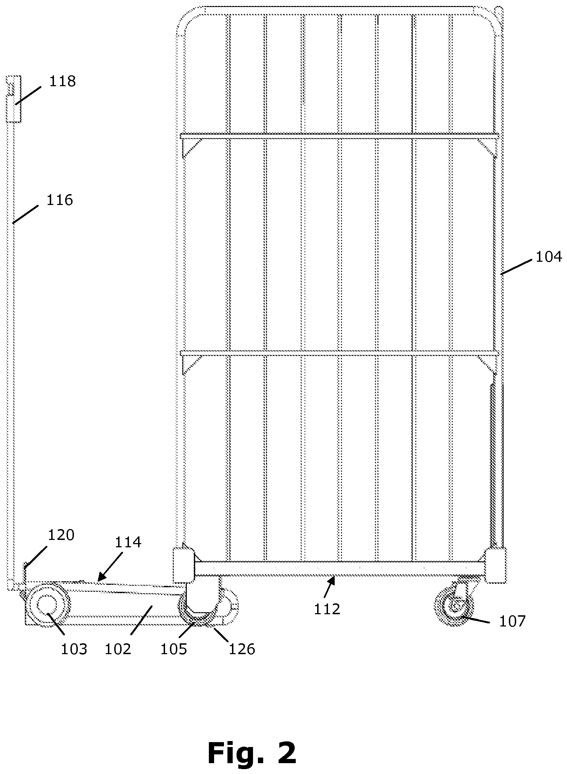

An embodiment of the transport system 100 according to the invention as shown in Figs. 1 and 2 comprises a motorized unit 102 with motor-driven wheels 103 for providing motorized transport of a wheeled transport device 104 having non-driven wheels, including a pair of rear wheels 105 and a pair of front wheels 107. In order to improve the steering capabilities of the wheeled transport device 104, at least the front wheels 107 or the rear wheels 105 are preferably rotatable around vertical axes, i.e. so-called swivel wheels. The motor-driven wheels 103 of the motorized unit 102 are provided at a rear end of the unit 102.

The wheeled transport device 104 comprises three side meshes 108 essentially consisting of rods, and a bottom meshed bottom structure 110 with a bottom surface 112 (see Fig. 2) to be engaged by an upper surface 114 of the motorized unit 102, as further described below.

The motorized unit 102 includes an upright member 116, at the free end of which there is provided a control joystick 118 allowing an operator to control the motorized wheels 103. In order to promote the steering capabilities of the motorized unit, the motorized wheels 103 may be individually controlled to be driven at different speeds, so that the motorized unit is caused to turn when the wheels are driven at different speeds of rotation.

At a rear portion of the motorized unit 102 there is provided a set of L-shaped locking elements 120 for engaging a rear cross bar 109 of the transport device 104, so as to thereby lock the motorized unit 102 to the transport device 104, when the motorized unit 102 is placed in its operating position with the upper surface 114 in full overlap with the bottom surface 112 of the transport device 104. For activation of the locking elements 120, the motorized unit comprises a foot-activatable activation device 122. Battery packs 124 are provided for powering the motor (not shown) of the motorized driving unit 102, and a front wheel 126 (see Fig. 2) is provided for supporting a front end of the motorized unit 102. The upper surface 114 may be upwardly spring biased in order to keep the upper surface 114 in close abutment with the bottom surface 112 of the wheeled transport device 104.

In the embodiment of Figs. 1 and 2, the wheeled transport device 104 is a transport cage as used, e.g. ,in storehouses for picking dairy products. It should, however, be understood that any other type of wheeled transport device is within the scope of the present invention.

When the motorized unit 102 is placed under the wheeled device 104, the upper surface 114 of the motorized unit 102 overlaps the bottom surface 112 of the wheeled transport device 104. In one embodiment, the upper surface 114 is inclined with respect to ground and has, at its rear end, a larger distance to ground than the clearance between the bottom surface 112 and ground. Hence, the rear end of the motorized unit 102 lifts the rear wheels 105 of the wheeled transport device 104 off the ground, when upper surface 114 overlaps bottom surface 112. The foot-activatable activation device 122 is in this embodiment used to lock the locking elements 120 of the motorized unit to the wheeled transport device 114. In another embodiment, the upper surface is not inclined with respect to ground, or only slightly inclined to facilitate its introduction under the bottom surface 112. In this embodiment, the entire upper surface 114 may be translated upwardly by activation of activation device 122, so as to lift rear and front wheels 105, 107 of the wheeled transport device off the ground.

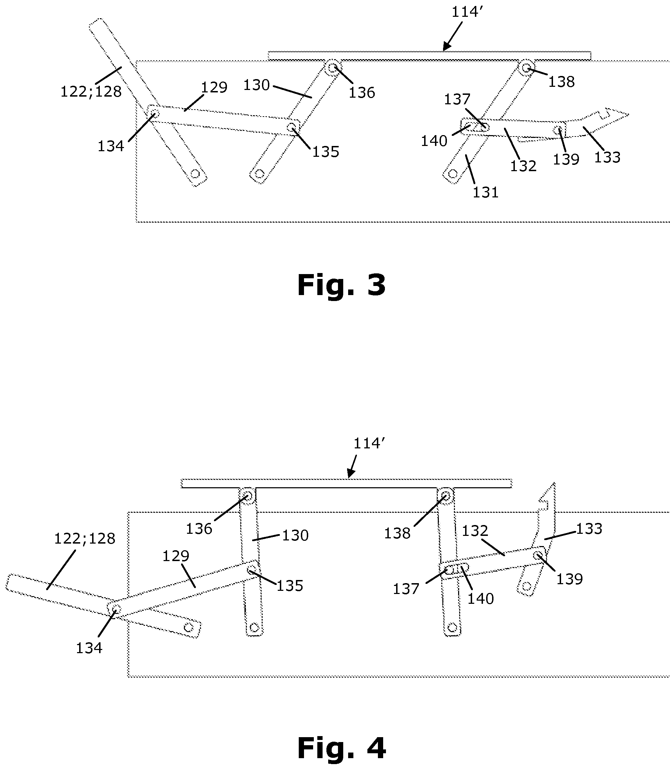

Figs. 3 and 4 illustrate a first embodiment of a system of the motorized unit of the present invention for engaging a transport cage or crate. The upper surface 114' for engaging the bottom surface 112 of the transport device 104 is supported and movable by a kinematic structure comprising rod members 128, 129, 130, and 131. Rod member 128 also serves as a foot-activation element. Further, the structure comprises a locking system with rod element 132 and hook element 133 for engaging a cross member of the wheeled transport device 104. The various elements are mutually interconnected at pivots points 134, 135, 136, 137, 138 and 139. Pivot 137 is slidably arranged in a slot 140 in member 132.

In Fig. 3, the mechanism is shown in a non-operating state, in which the upper surface 114' of the motorized unit does not engage the bottom surface 112 of the wheeled device 104. In Fig. 4, the upper surface 114' is shown in the operating state, in which it is lifted to engage the bottom surface 112 of the wheeled device. It will be appreciated that the system illustrated in Figs. 3 and 4 lifts the entire transport device 104, i.e. rear and front end, whereby rear and front wheels 105 and 107 are all lifted off from ground.

## Claims

1. A transport system for conveying items, comprising a wheeled transport device (104) and a motorized unit (102), which is separate from the wheeled transport device (104), the motorized unit (102) comprising a plurality of wheels (103; 126) and an electric motor drive for driving at least one of the wheels (103), the motorized unit (102) being configured to enter into locking engagement with the wheeled transport device (104), and to lift a front and a rear portion of the wheeled transport device (104) off the ground, whereby the wheeled transport device (104) can be moved in a motorized manner by activating the motor drive of the motorized unit (102), wherein the motorized unit (102) comprises a structure for moving its upper surface (114; 114') between a non-engagement configuration, in which it may pass freely under the bottom surface (112) of the wheeled transport device (104), and an engagement configuration, in which at least a portion of said upper surface (114; 114') engages the bottom surface (112) of the wheeled transport device (104), wherein the motorized unit (102) is configured to lift all of the wheels (105; 107) of the wheeled transport device (104) off the ground when the upper surface (114; 114') is in said engagement configuration, so that the entire load of the wheeled transport device (104) rests on the motorized unit (102),
**characterized in that**:
- the height of a lifting portion of the motorized unit (102), including towing, lifting and driving elements, fits in between the bottom surface (112) of the wheeled transport device (104) and ground; and **in that**
- the upper surface (114) of the motorized unit (102) overlaps the bottom surface (112) of the wheeled transport device (104), when the motorized unit is placed under the wheeled transport device (104);
- the motorized unit (102) comprises a foot-activatable activation device (122) configured such that the entire upper surface (114) of the motorized unit (102) is upwardly translatable to lift all of the wheels (105;107) of the wheeled transport device (104) off the ground when said foot-activatable device (122) is activated.

2. A transport system according to claim 1, wherein an upper surface (114) of the motorized unit (102) is inclined with respect to the bottom surface (112) of the wheeled transport device (104), so that at least a front end of the motorized unit (102) may pass freely under said bottom surface (112).

3. A transport system according to claim 2, wherein the upper surface (114; 114') of the motorized unit (102) is upwardly spring-biased.

4. A transport system according to any of the preceding claims, wherein the motor drive of the motorized unit (102) is configured to drive two wheels (103) at its rear end, and wherein the motorized unit (102) further comprises a control system allowing a user to operate said two wheels (103) at different speeds in order to thereby steer the transport system during motorized movement thereof.

5. A transport system according to any of the preceding claims, wherein the motorized unit (102) further comprises a structure (133; 139) for releasably locking it to the wheeled transport device (104).

6. A transport system according to any of the preceding claims, wherein the motorized unit (102) further comprises an upright member (116) with a control interface for allowing an operator to control the motorized unit (102).

7. A transport system according to any of the preceding claims, wherein the motorized unit further comprises an exchangeable rechargeable battery pack (124) for powering the motor drive.

8. A method for motorized operation of a wheeled, non-motorized transport cage (104) in a storehouse for dairy products during picking of items in the storehouse, the method comprising the steps of:
- providing a motorized unit (102), which is separate from the wheeled transport cage (104), the motorized unit (102) comprising a plurality of wheels (103; 126) and an electric motor drive for driving at least one of the wheels (103), the motorized unit (102) further comprising a structure for moving its upper surface (114;114') between a non-engagement configuration, in which it may pass freely under the bottom surface (112) of the wheeled transport cage (104), and an engagement configuration, in which at least a portion of said upper surface (114; 114') engages the bottom surface (112) of the wheeled transport cage (104), wherein:
- the height of a lifting portion of the motorized unit (102), including towing, lifting and driving elements, fits in between the bottom surface (112) of the wheeled transport cage (104) and ground;
- the upper surface (114;114') of the motorized unit (102) overlaps the bottom surface (112) of the wheeled transport cage (104), when the motorized unit is placed under the wheeled transport cage (104);
- the motorized unit (102) comprises a foot-activatable activation device (122) configured such that the entire upper surface (114) of the motorized unit (102) is upwardly translatable to lift all of the wheels (105; 107) of the wheeled transport cage (104) off the ground when said foot-activatable device (122) is activated; the method further comprising:
- entering the motorized unit (102) into locking engagement with the wheeled transport cage (104);
- causing the upper surface (114; 114') of the motorized unit (102) to lift all of the wheels of the wheeled transport cage (104) and a front and rear portion of the wheeled transport cage (104) off the ground, while the upper surface (114; 114') is in said engagement configuration, so that the entire load of the wheeled transport cage (104) rests on the motorized unit (102);
- moving the wheeled transport cage (104) in a motorized manner by activating the motor drive of the motorized unit (102).

## Patentansprüche

1. Transportsystem zum Befördern von Gegenständen, umfassend eine mit Rädern versehene Transportvorrichtung (104) und eine motorisierte Einheit (102), die von der mit Rädern versehenen Transportvorrichtung (104) getrennt ist, wobei die motorisierte Einheit (102) mehrere Räder (103; 126) und einen Elektromotorantrieb zum Antreiben mindestens eines der Räder (103) umfasst, wobei die motorisierte Einheit (102) konfiguriert ist, um in Verriegelungseingriff mit der mit Rädern versehenen Transportvorrichtung (104) einzutreten und einen vorderen und einen hinteren Abschnitt der mit Rädern versehenen Transportvorrichtung (104) vom Grund abzuheben, wodurch die mit Rädern versehene Transportvorrichtung (104) in einer motorisierten Weise durch Betätigen des Motorantriebs der motorisierten Einheit (102) bewegt werden kann, wobei die motorisierte Einheit (102) eine Struktur zum Bewegen ihrer oberen Fläche (114; 114') zwischen einer Nichteingriffskonfiguration, in der sie frei unter der Bodenfläche (112) der mit Rädern versehenen Transportvorrichtung (104) verlaufen kann, und einer Eingriffskonfiguration, in der mindestens ein Abschnitt der oberen Fläche (114; 114') mit der Bodenfläche (112) der mit Rädern versehenen Transportvorrichtung (104) in Eingriff kommt, umfasst, wobei die motorisierte Einheit (102) konfiguriert ist, um alle Räder (105; 107) der mit Rädern versehenen Transportvorrichtung (104) vom Grund abzuheben, wenn die obere Fläche (114; 114') in der Eingriffskonfiguration ist, so dass die gesamte Last der mit Rädern versehenen Transportvorrichtung (104) auf der motorisierten Einheit (102) ruht,
**dadurch gekennzeichnet, dass**:
- die Höhe eines Hebeabschnitts der motorisierten Einheit (102), der Zug-, Hebe- und Antriebselemente aufweist, zwischen die Bodenfläche (112) der mit Rädern versehenen Transportvorrichtung (104) und den Grund passt, und dass
- die obere Fläche (114) der motorisierten Einheit (102) die Bodenfläche (112) der mit Rädern versehenen Transportvorrichtung (104) überlappt, wenn die motorisierte Einheit unter der mit Rädern versehenen Transportvorrichtung (104) platziert ist,
- die motorisierte Einheit (102) eine mit dem Fuß betätigbare Betätigungsvorrichtung (122) umfasst, die derart konfiguriert ist, dass die gesamte obere Fläche (114) der motorisierten Einheit (102) nach oben übersetzbar ist, um alle Räder (105; 107) der mit Rädern versehenen Transportvorrichtung (104) vom Grund abzuheben, wenn die mit dem Fuß betätigbare Vorrichtung (122) betätigt ist.

2. Transportsystem nach Anspruch 1, wobei eine obere Fläche (114) der motorisierten Einheit (102) in Bezug auf die Bodenfläche (112) der mit Rädern versehenen Transportvorrichtung (104) derart geneigt ist, dass mindestens ein vorderes Ende der motorisierten Einheit (102) frei unter der Bodenfläche (112) verlaufen kann.

3. Transportsystem nach Anspruch 2, wobei die obere Fläche (114; 114') der motorisierten Einheit (102) nach oben federvorgespannt ist.

4. Transportsystem nach einem der vorhergehenden Ansprüche, wobei der Motorantrieb der motorisierten Einheit (102) konfiguriert ist, um zwei Räder (103) an ihrem hinteren Ende anzutreiben, und wobei die motorisierte Einheit (102) ferner ein Steuersystem umfasst, das es einem Benutzer erlaubt, die zwei Räder (103) bei unterschiedlichen Geschwindigkeiten zu betreiben, um dadurch das Transportsystem während einer motorisierten Bewegung davon zu lenken.

5. Transportsystem nach einem der vorhergehenden Ansprüche, wobei die motorisierte Einheit (102) ferner eine Struktur (133; 139) zum lösbaren Verriegeln davon mit der mit Rädern versehenen Transportvorrichtung (104) umfasst.

6. Transportsystem nach einem der vorhergehenden Ansprüche, wobei die motorisierte Einheit (102) ferner ein aufrechtes Element (116) mit einer Steuerschnittstelle zum Erlauben eines Bedieners, die motorisierte Einheit (102) zu steuern, umfasst.

7. Transportsystem nach einem der vorhergehenden Ansprüche, wobei die motorisierte Einheit ferner ein austauschbares wiederaufladbares Batteriepack (124) zum Versorgen des Motorantriebs umfasst.

8. Verfahren zum motorisierten Betreiben eines mit Rädern versehenen, nicht motorisierten Transportkäfigs (104) in einem Lagerhaus für Milchprodukte während eines Aufnehmens von Gegenständen in dem Lagerhaus, wobei das Verfahren die folgenden Schritte umfasst:
- Bereitstellen einer motorisierten Einheit (102), die von dem mit Rädern versehenen Transportkäfig (104) getrennt ist, wobei die motorisierte Einheit (102) mehrere Räder (103; 126) und einen Elektromotorantrieb zum Antreiben mindestens eines der Räder (103) umfasst, wobei die motorisierte Einheit (102) ferner eine Struktur zum Bewegen ihrer oberen Fläche (114; 114') zwischen einer Nichteingriffskonfiguration, in der sie frei unter der Bodenfläche (112) des mit Rädern versehenen Transportkäfigs (104) verlaufen kann, und einer Eingriffskonfiguration, in der mindestens ein Abschnitt der oberen Fläche (114; 114') mit der Bodenfläche (112) des mit Rädern versehenen Transportkäfigs (104) in Eingriff kommt, umfasst,
wobei:
- die Höhe eines Hebeabschnitts der motorisierten Einheit (102), der Zug-, Hebe- und Antriebselemente aufweist, zwischen die Bodenfläche (112) des mit Rädern versehenen Transportkäfigs (104) und den Grund passt;
- die obere Fläche (114; 114') der motorisierten Einheit (102) die Bodenfläche (112) des mit Rädern versehenen Transportkäfigs (104) überlappt, wenn die motorisierte Einheit unter dem mit Rädern versehenen Transportkäfig (104) platziert ist,
- die motorisierte Einheit (102) eine mit dem Fuß betätigbare Betätigungsvorrichtung (122) umfasst, die derart konfiguriert ist, dass die gesamte obere Fläche (114) der motorisierten Einheit (102) nach oben übersetzbar ist, um alle Räder (105; 107) des mit Rädern versehenen Transportkäfigs (104) vom Grund abzuheben, wenn die mit dem Fuß betätigbare Vorrichtung (122) betätigt ist,
wobei das Verfahren ferner Folgendes umfasst:
- Eintreten der motorisierten Einheit (102) in Verriegelungseingriff mit dem mit Rädern versehenen Transportkäfig (104),
- Veranlassen der oberen Fläche (114; 114') der motorisierten Einheit (102), alle Räder des mit Rädern versehenen Transportkäfigs (104) und einen vorderen und hinteren Abschnitt des mit Rädern versehenen Transportkäfigs (104) vom Grund abzuheben, während die obere Fläche (114; 114') in der Eingriffskonfiguration ist, so dass die gesamte Last des mit Rädern versehenen Transportkäfigs (104) auf der motorisierten Einheit (102) ruht,
- Bewegen des mit Rädern versehenen Transportkäfigs (104) in einer motorisierten Weise durch Betätigen des Motorantriebs der motorisierten Einheit (102).

## Revendications

1. Système de transport pour le convoyage d'articles, comprenant un dispositif de transport à roues (104) et une unité motorisée (102) qui est séparée du dispositif de transport à roues (104), l'unité motorisée (102) comprenant une pluralité de roues (103 ; 126) et un entraînement à moteur électrique pour entraîner au moins une des roues (103), l'unité motorisée (102) étant conçue pour entrer en engagement de verrouillage dans le dispositif de transport à roues (104) et pour soulever une partie avant et une partie arrière du dispositif de transport à roues (104) du sol, le dispositif de transport à roues (104) pouvant être déplacé de manière motorisée en activant l'entraînement à moteur de l'unité motorisée (102), l'unité motorisée (102) comprenant une structure pour déplacer sa surface supérieure (114 ; 114') entre une configuration de non-engagement dans laquelle elle peut passer librement sous la surface de fond (112) du dispositif de transport à roues (104) et une configuration d'engagement dans laquelle au moins une partie de ladite surface supérieure (114 ; 114') s'engage dans la surface de fond (112) du dispositif de transport à roues (104), l'unité motorisée (102) étant conçue pour soulever toutes les roues (105 ; 107) du dispositif de transport à roues (104) du sol lorsque la surface supérieure (114 ; 114') est dans ladite configuration d'engagement, de sorte que toute la charge du dispositif de transport à roues (104) repose sur l'unité motorisée (102),
**caractérisé en ce que** :
- la hauteur d'une section de levage de l'unité motorisée (102), y compris les éléments de remorquage, de levage et d'entraînement, s'ajuste entre la surface de fond (112) du dispositif de transport à roues (104) et le sol ; et **en ce que**
- la surface supérieure (114) de l'unité motorisée (102) chevauche la surface de fond (112) du dispositif de transport à roues (104) lorsque l'unité motorisée est placée sous le dispositif de transport à roues (104) ;
- l'unité motorisée (102) comprend un dispositif d'activation actionnable avec le pied (122) conçu pour que toute la surface supérieure (114) de l'unité motorisée (102) soit déplaçable vers le haut pour soulever toutes les roues (105 ; 107) du dispositif de transport à roues (104) du sol lorsque ledit dispositif d'activation actionnable avec le pied (122) est activé.

2. Système de transport selon la revendication 1, dans lequel une surface supérieure (114) de l'unité motorisée (102) est inclinée par rapport à la surface de fond (112) du dispositif de transport à roues (104), de sorte qu'au moins une extrémité avant de l'unité motorisée (102) peut passer librement sous ladite la surface de fond (112).

3. Système de transport selon la revendication 2, dans lequel la surface supérieure (114 ; 114') de l'unité motorisée (102) est inclinée par ressort vers le haut.

4. Système de transport selon l'une quelconque des revendications précédentes, dans lequel l'entraînement à moteur de l'unité motorisée (102) est conçu pour entraîner deux roues (103) à son extrémité arrière, et dans lequel l'unité motorisée (102) comprend en outre un système de commande permettant à un utilisateur d'actionner lesdites deux roues (103) à des vitesses différentes afin de diriger le système de transport pendant son mouvement motorisé.

5. Système de transport selon l'une quelconque des revendications précédentes, dans lequel l'unité motorisée (102) comprend en outre une structure (133 ; 139) pour la verrouiller de manière dissociable au dispositif de transport à roues (104).

6. Système de transport selon l'une quelconque des revendications précédentes, dans lequel l'unité motorisée (102) comprend en outre un élément vertical (116) doté d'une interface de commande pour permettre à un opérateur de commander l'unité motorisée (102).

7. Système de transport selon l'une quelconque des revendications précédentes, dans lequel l'unité motorisée comprend en outre un pack de batteries rechargeables échangeables (124) pour alimenter l'entraînement à moteur.

8. Procédé d'actionnement motorisé d'une cage de transport non motorisée à roues (104) dans un entrepôt destiné à des produits laitiers pendant le prélèvement d'articles dans l'entrepôt, ce procédé comprenant les étapes suivantes :
- prévision d'une unité motorisée (102) qui est séparée de la cage de transport à roues (104), l'unité motorisée (102) comprenant une pluralité de roues (103 ; 126) et un entraînement à moteur électrique pour entraîner au moins une des roues (103), l'unité motorisée (102) comprenant en outre une structure pour déplacer sa surface supérieure (114 ; 114') entre une configuration de non-engagement dans laquelle elle peut passer librement sous la surface de fond (112) de la cage de transport à roues (104) et une configuration d'engagement dans laquelle au moins une partie de ladite surface supérieure (114 ; 114') s'engage dans la surface de fond (112) de la cage de transport à roues (104), dans lequel :
- la hauteur d'une section de levage de l'unité motorisée (102), y compris les éléments de remorquage, de levage et d'entraînement, s'ajuste entre la surface de fond (112) de la cage de transport à roues (104) et le sol ;
- la surface supérieure (114 ; 114') de l'unité motorisée (102) chevauche la surface de fond (112) de la cage de transport à roues (104) lorsque l'unité motorisée est placée sous la cage de transport à roues (104) ;
- l'unité motorisée (102) comprend un dispositif d'activation actionnable avec le pied (122) conçu pour que toute la surface supérieure (114) de l'unité motorisée (102) soit déplaçable vers le haut pour soulever toutes les roues (105 ; 107) de la cage de transport à roues (104) du sol lorsque ledit dispositif d'activation actionnable avec le pied (122) est activé ;
ce procédé comprenant en outre :
- l'entrée de l'unité motorisée (102) en engagement avec la cage de transport à roues (104) ;
- le fait d'amener la surface supérieure (114 ; 114') de l'unité motorisée (102) à soulever toutes les roues de la cage de transport à roues (104) et une partie avant et arrière de la cage de transport à roues (104) du sol alors que la surface supérieure (114 ; 114') est dans ladite configuration d'engagement, de sorte que toute la charge de la cage de transport à roues (104) repose sur l'unité motorisée (102) ;
- le déplacement de la cage de transport à roues (104) de manière motorisée en activant l'entraînement à moteur de l'unité motorisée (102) .
